# EUROPÄISCHE PATENTSCHRIFT

(11) **EP 3 376 065 B1**
(45) Veröffentlichungstag und Bekanntmachung des Hinweises auf die Patenterteilung: **26.01.2022**
(21) Anmeldenummer: 17161357.3
(22) Anmeldetag: 16.03.2017
(51) Int. Cl.: F16G 15/06

(54) **VERBINDUNGSTEIL FÜR KETTENGEHÄNGE ZUM AUSBILDEN EINER KETTENSCHLAUFE AN EINEM AUS KETTENGLIEDERN BESTEHENDEN KETTENSTRANG**
CONNECTING PART FOR CHAIN SUSPENSIONS FOR FORMING A CHAIN LOOP ON A CHAIN LINK COMPOSED OF CHAIN ELEMENTS
ÉLÉMENT DE RACCORD POUR UNE CHAÎNE DE SUSPENSION DESTINÉ À FORMER UNE BOUCLE DE CHAÎNE DANS UNE CHAÎNE COMPOSÉE DE MAILLONS DE CHAÎNE

(43) Veröffentlichungstag der Anmeldung: 19.09.2018
(73) Patentinhaber: Pewag Austria GmbH, 8605 Kapfenberg (AT)
(72) Erfinder: OSWALD, Bernhard, 8605 Kapfenberg (AT)
(74) Vertreter: Patentanwälte Geyer, Fehners & Partner mbB

(56) Entgegenhaltungen:
- US-A- 2 165 377
- US-A- 2 878 640
- US-A- 5 647 198

## Beschreibung

Die Erfindung bezieht sich auf ein Kettengehänge. So ein Kettengehänge ist z.B. aus der US 2 165 377 A bekannt.

Bei bestimmten Einsatzfällen von Kettengehängen ist zum Anheben einer Last die Ausbildung einer Schlaufe um die Last oder durch die Last nötig, besonders dann, wenn keine geeigneten Anschlagpunkte für das Kettengehänge an der Last vorhanden sind.

Der einfachste Fall liegt dann vor, wenn der Tragstrang des Kettengehänges an seinem freien Ende mit einem Haken versehen ist, wobei der Kettenstrang, nachdem er um die anzuhebende Last herumgeführt ist, mit dem Haken an der Oberseite der Last in den dort senkrecht nach oben verlaufenden Kettenstrang eingehakt und die Hakenöffnung dann in geeigneter Weise verschlossen wird, um ein unerwünschtes Herauslaufen des Kettenstranges aus dem Haken zu vermeiden.

Bei solchen Kettengehängen treten in diesem Fall aber zusätzliche Biegebeanspruchungen in der Kette auf, die durch das Verbindungsteil (Haken) hervorgerufen werden, wodurch die Tragfähigkeit eines solchen Kettengehänges bis zu 20 % herabgesetzt wird.

Das Bilden einer Schlaufe an einer Last kann dann problematisch sein, wenn eine dort vorhandene Öffnung, durch welche der Kettenstrang hindurchgeführt werden muß, um die Schlaufe zu bilden, zu klein ist, um ein am Ende des Kettenstranges angebrachtes Verbindungsteil durch diese Öffnung hindurchzuführen. Es wäre daher von großem Vorteil, wenn man dabei die Kette alleine durch die Öffnung hindurchführen und erst anschließend mit einem entsprechenden Verbindungsteil zur Ausbildung der gewünschten Schlaufe verbinden könnte. Dabei wäre es weiterhin sehr wichtig, daß beim Bilden von Schlaufen das betreffende Verbindungsteil kein unbeabsichtigtes Lösen und Freigeben der Last möglich macht.

Ausgehend hiervon liegt der Erfindung die Aufgabe zugrunde, ein Verbindungsteil der eingangs genannten Art zu schaffen, das in einfacher Weise montiert werden kann, auch nachdem die Kette durch die Last zur Ausbildung einer Schlaufe geführt wurde, und in den tragenden Kettenstrang eingefädelt werden kann, nachdem das letzte Kettenglied in das Verbindungsteil eingeführt und fixiert wurde, ohne daß die Tragfähigkeit der Schlaufe eines damit versehenen Kettengehänges abnimmt und auch ein unbeabsichtigtes Lösen der Last aus der Schlaufe ausgeschlossen ist.

Erfindungsgemäß wird dies erreicht mit einem Kettengehänge nach Anspruch 1.

Durch die Erfindung wird ein Kettengehänge geschaffen, das in einer überraschenden Weise eine Vielzahl von Vorteilen in sich vereint: So kann der tragende Kettenstrang allein durch eine Aufnahmeöffnung geführt und anschließend erst das Verbindungsteil mit ihm verbunden werden, indem es in den tragenden Kettenstrang eingefädelt und das letzte Kettenglied des Kettenstranges an der Unterseite der Längsschenkel in den Spalt zwischen beiden eingeführt und dort mit dem Bolzen fixiert wird. Damit besteht die Möglichkeit, Schlaufen auszubilden, die sich nicht festziehen, andererseits den tragenden Kettenstrang vollständig umschließen, so daß ein unbeabsichtigtes Lösen ausgeschlossen ist. Dabei dient der Bolzen zum einen dazu, das Kettenende mit dem Verbindungsteil zu verbinden, und andererseits verschließt er die Öffnung des Verbindungsteils, so daß der tragende Kettenstrang nicht aus dem Verbindungsteil gleiten oder herausfallen kann. Schließlich ist durch die spezielle Ausführung des erfindungsgemäßen Verbindungsteils erreicht, daß die Tragfähigkeit der Schlaufe nicht reduziert ist.

Das erfindungsgemäße Kettengehänge ist so gestaltet, daß sich das in den beiden seitlichen Ausnehmungen der Längsschenkel, angenähert parallel zur Öffnungsebene des Spaltes zwischen den Längsschenkeln, liegende Kettenglied des Haltestrangs in diesen Ausnehmungen so aufgenommen ist, daß über die Flächen dieser Ausnehmungen die Belastung an dieses Kettenglied übertragen wird, ohne daß höhere Biegebeanspruchungen in ihm auftreten als in einem anderen Kettenglied des geraden Kettenstranges. Dabei sind die Ausnehmungen so gestaltet, daß von dem erfindungsgemäßen Verbindungsteil keine Belastung direkt an das im Tragstrang dem genannten Kettenglied folgende, senkrecht zu diesem verlaufende Kettenglied, das durch die Innenöffnung des Querbügels auf dessen Außenseite hindurchragt und dort an ein weiteres Glied des Tragstranges angeschlossen ist, übertragen wird. Damit ist auch eine zusätzliche Biegebeanspruchung in diesem weiteren Kettenglied ausgeschlossen, so daß es bei dem erfindungsgemäßen Verbindungsteil zu keiner Herabsetzung der Tragfähigkeit kommt.

Wenn der Querbügel so geformt ist, daß der Neigungswinkel der Kette in der Schlaufe sehr gering ist (z. B. kleiner als 15°), kann sogar eine Tragfähigkeitsabminderung aufgrund scharfer Kanten an der Last kompensiert werden.

In einer vorteilhaften Ausgestaltung der Erfindung bildet bei dem erfindungsgemäßen Verbindungsteil der Querbügel auf seiner Innenseite eine Öffnung aus, deren Breite, quer zur Längsrichtung der Längsschenkel gesehen, etwas größer als die Stegbreite eines anzuschließenden Kettengliedes, jedoch kleiner als dessen Gliedbreite, ist. Dadurch wird beim montierten Verbindungsteil sichergestellt, daß der Querbügel in Verbindung mit den Vertiefungen an beiden Längsschenkeln ein in diesen sitzendes, angenähert parallel zur Öffnungsebene des Spaltes liegendes Kettenglied sicher in Längsrichtung der Längsschenkel, in Richtung vom Bolzen weg, abstützt, ein in dieses senkrecht zu ihm eingehängtes Vertikalglied jedoch durch die Querbügelöffnung hindurch auf die Außenseite des Verbindungsteiles zum Anschluß an den dortigen Teil der Tragkette hinausragen kann. Dadurch ist sichergestellt, daß dieses durch den Querbügel hindurchragende Vertikalglied des Kettengehänges keiner Belastung durch das Verbindungsteil ausgesetzt ist.

In weiterer vorteilhafter Ausgestaltung der Erfindung ist bei dem Verbindungsteil die Mantelfläche des Bolzens mit einem Krümmungsradius versehen, der angenähert dem Krümmungsradius des gekrümmten Endbereiches der Innenöffnung eines Kettengliedes des anzuschließenden Kettenstranges ist.

Das erfindungsgemäße Verbindungsteil kann in jeder geeigneten Weise hergestellt sein, ist jedoch ganz besonders bevorzugt als Schmiedeteil ausgeführt.

Zur Sicherung des Bolzens gegen ein unbeabsichtigtes Lösen sind verschiedene vorteilhafte Ausführungen einsetzbar, wobei der Bolzen im montierten Zustand durch eine Klebeverbindung an den beiden Längsschenkeln oder durch einen Splint oder durch eine selbstsichernde Mutter fixiert ist.

Nach der Erfindung ist bei dem erfindungsgemäßen Verbindungsteil der gerundete Verlauf des Querbügels zwischen beiden Längsschenkeln halbkreisförmig ausgebildet, wobei, erneut bevorzugt, an beiden Enden des halbkreisförmigen Verlaufes jeweils ein zu den Längsschenkeln hin gerichteter gerade verlaufender Steg angebracht ist, der mit dem zugewandten Endbereich eines der beiden Längsschenkel verbunden ist.

Durch die Erfindung ist ein Verbindungsteil für Kettengehänge zum Ausbilden einer Kettenschlaufe aus einem aus Kettengliedern bestehenden Kettenstrang geschaffen worden, das in einer bemerkenswerten Weise eine Mehrzahl von wichtigen Vorteilen miteinander vereint, wie dies weiter oben bereits im einzelnen ausgeführt wurde. Wichtig ist dabei die Eigenschaft des erfindungsgemäßen Verbindungsgliedes, Belastungen an ein Kettenglied zu übertragen, ohne eine höhere Biegebeanspruchung als üblich im Kettenglied zu erzeugen.

Die Erfindung wird nachfolgend anhand der Zeichnungen im Prinzip beispielshalber noch näher erläutert. Es zeigen:
- Fig. 1: ein Kettengehänge mit einem aus Kettengliedern bestehenden Kettenstrang, der an seinem freien Ende mit einem Verbindungsteil in Form eines Hakens versehen ist, wobei der Kettenstrang in bekannter Weise unter Ausbildung einer Kettenschlaufe um die Last herumgeführt ist;
- Fig. 2: ein erfindungsgemäßes Verbindungsteil, in perspektivischer Draufsicht, für die Anwendung bei einem Kettengehänge zum Ausbilden einer Kettenschlaufe;
- Fig. 3: in einer perspektivischen Seitenansicht das erfindungsgemäße Verbindungsteil entsprechend Fig. 2 im eingefädelten Zustand an einem Kettengehänge, und
- Fig. 4: das erfindungsgemäße Verbindungsteil entsprechend den Fig. 2 und 3 im Einsatz zum Anheben einer Last.

In der nachfolgenden Figurenbeschreibung sind gleiche Teile stets mit gleichen Bezugszeichen versehen.

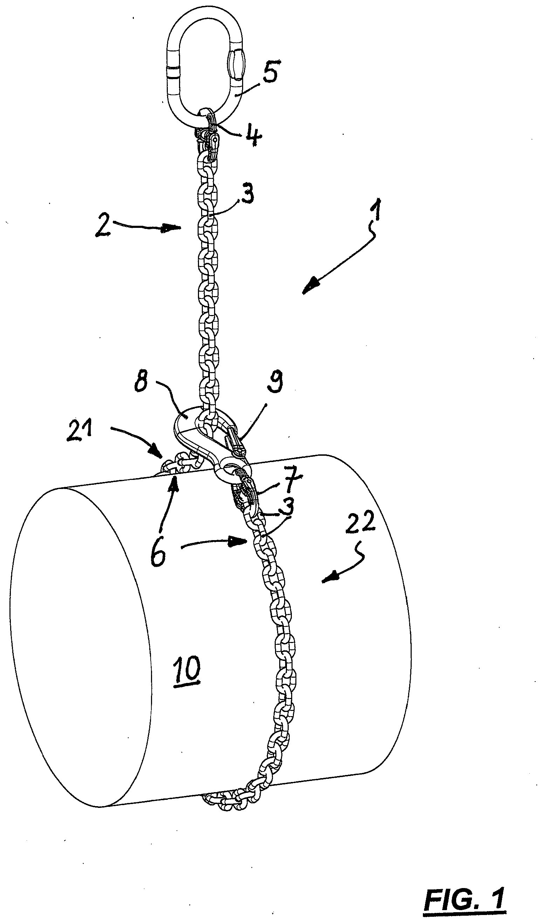

In Fig. 1 ist eine perspektivische Darstellung eines Kettengehänges 1 gezeigt, bei dem in bekannter Weise ein Kettenstrang 2, welcher aus einer Vielzahl von Kettengliedern 3 besteht, über ein Anschlußglied 4 an einem Aufhängering 5 befestigt ist.

Zur Aufnahme einer Last 10, die nur rein prinzipiell als Zylinder dargestellt ist, ist der Kettenstrang 2 in Form einer Kettenschlaufe 6 um den Außenumfang dieser Last 10 herumgeführt. Am Ende des Kettenstranges 2 ist, wiederum über ein Anschlußglied 7, ein Verbindungsteil 8 in Form eines Hakens angebracht, der in dem in Fig. 1 gezeigten montierten Zustand oberhalb der Last 10 den dort nach oben laufenden Teil des Kettenstranges 2 umhakt, so daß der von oben kommende Kettenstrang 2 durch die Öffnung des Hakens 8 hindurchläuft und von dort aus zur Ausbildung der Kettenschlaufe 6 um den Außenumfang der Last 10 herumgeführt ist, wie dies Fig. 1 zeigt.

Bei dieser bekannten Anordnung, bei der das Verbindungsteil 8 in Form eines Hakens ausgebildet ist, bei dem zur Schlaufenbildung der Kettenstrang 2 durch die Hakenöffnung hindurchgeführt und von dort aus um den Außenumfang der aufzunehmenden Last 10 herumgeführt ist, wird jedoch eine Kettenschlaufe 6 gebildet, die sich unter Last festzieht. Durch die Ausbildung des Verbindungsteiles 8 in Form eines solchen Hakens, wie er in Fig. 1 dargestellt ist, werden in dem Kettengehänge jedoch zusätzliche Biegebeanspruchungen auf den Kettenstrang 2 ausgeübt, wodurch die Tragfähigkeit des Kettengehänges 1 um bis zu 20 % abgesenkt wird.

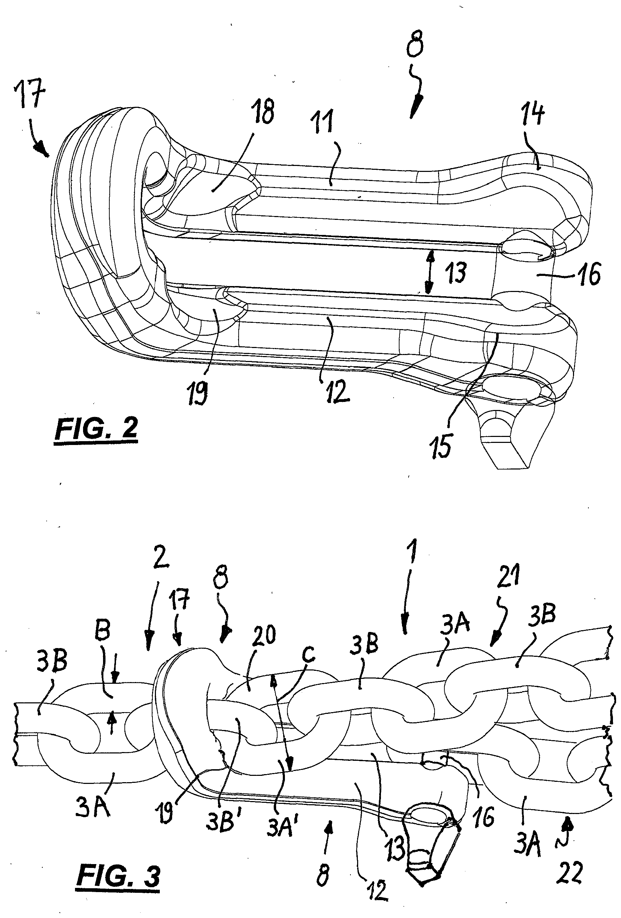

In Fig. 2 ist nun ein Anschlußglied 8 gezeigt, das zwei zueinander parallele Längsschenkel 11, 12 aufweist, die gleich lang ausgebildet sind und zwischen sich einen Spalt 13 freilassen.

Die Längsschenkel 11, 12 sind an ihren einen Endbereichen 14, 15, die als "untere" Endbereiche bezeichnet sein sollen, über einen senkrecht zu ihrer Längserstreckung verlaufenden Bolzen 16 miteinander verbindbar, wobei im montierten Zustand dieser Bolzen 16 lagefixiert ist. Diese Lagefixierung kann auf jede geeignete Weise vorgenommen werden, etwa durch Anwendung einer Klebeverbindung an mindestens einem der Längsschenkel 11, 12, oder durch eine geeignete Fixierung mittels eines Spintes, oder auch durch eine selbstsichernde Mutter, wobei im letztgenannten Fall der Bolzen 16 durch beide Längsschenkel 11, 12 durchgeführt wird und danach mit der selbstsichernden Mutter verschraubt ist.

Im Bereich ihrer anderen Enden, die als "obere" Enden bezeichnet sein sollen, laufen die beiden Längsschenkel 11, 12 in einen Querbügel 17 ein. Dieser Querbügel 17 springt von den Enden der Längsschenkel 11, 12 jeweils senkrecht, zumindest angenähert senkrecht, nach der Vorderseite des Verbindungsteiles 8 (die in der Darstellung der Fig. 2 nach oben weist) hin vor und verbindet die beiden Längsschenkel 11, 12 miteinander, wobei der Querbügel 17 im Bereich zwischen den Längsschenkeln 11, 12 einen gerundeten Verlauf aufweist, der bevorzugt eine halbkreisförmige Rundung ausbildet. Dabei ist an beiden Enden des halbkreisförmigen Verlaufes jeweils ein zu den Längsschenkeln 11, 12 hin gerichteter, seinerseits gerade verlaufender Steg angebracht, der das jeweilige Ende des halbkreisförmigen Verlaufes mit dem zugewandten Endbereich eines der beiden Längsschenkel 11, 12 verbindet.

Der Querbügel 17 bildet an seiner unteren Seite ebenfalls eine Öffnung aus, die in Höhe der Endbereiche der Längsschenkel 11 und 12 in den zwischen diesen ausgebildeten Spalt 13 einmündet. Dabei ragt der Querbügel 17 von den Längsschenkeln 11, 12 so weit nach oben, daß die Öffnung an seiner Innenseite angenähert der halben Gliedbreite C eines Kettengliedes 3 des Kettengehänges 1 entspricht oder, in anderen Worten, daß ein Kettenglied 3, das senkrecht zum Spalt 13, in dessen Längsrichtung gesehen, angeordnet ist, problemfrei durch die Innenöffnung des Querbügels 17 hindurchlaufen kann.

Der Spalt 13 zwischen den beiden Längsschenkeln 11 und 12 ist breiter als die Stegdicke **B** eines Kettengliedes 3 an dessen Schweißstelle, jedoch kleiner als dessen Gliedbreite C ausgeführt. Dies bedeutet, daß Horizontalglieder des Kettenstrangs 2, die bei montiertem Verbindungsteil 8 angenähert parallel zu der Lage des Spaltes 13 liegen, durch diesen nicht und auch nicht durch die Innenöffnung des Querbügels 17 in Längsrichtung des Verbindungsteiles 8 hindurchtreten können, während Vertikalglieder, die senkrecht zur Aufspannfläche des Spaltes 13 und in dessen Längsrichtung ausgerichtet sind, sowohl durch den Spalt 13, wie auch durch die Öffnung der Innenseite des Querbügels hindurchtreten können.

Wie ferner der Fig. 2 entnehmbar ist, ist an jedem der beiden Längsschenkel 11, 12 an dessen Oberseite im Bereich seines Einlaufs in den Querbügel 17 auf der dem Spalt 13 zwischen beiden Längsschenkeln 11, 12 zugewandten Seite des jeweiligen Längsschenkels 11, 12 sowie bis zu diesem Spalt 13 hin eine Vertiefung 18 bzw. 19 angebracht, in der ein abgerundeter Endbereich 20 (vgl. Fig. 3) eines horizontal liegenden Kettengliedes 3, das angenähert parallel zur Öffnungsebene des Spaltes 13 zwischen beiden Längsschenkeln 11, 12 liegt, unter gleichzeitiger Abstützung in Längsrichtung der Längsschenkel 11, 12, nämlich in Richtung vom Bolzen 16 weg, aufnehmbar ist.

Es sei nun Bezug genommen auf die Darstellung der Fig. 3, in welcher (in perspektivischer Darstellung) ein in einem Kettengehänge 1 montiertes Verbindungsteil 8 dargestellt ist.

Das Kettengehänge 1 umfaßt dabei einen aus Kettengliedern 3 bestehenden Kettenstrang 2, wobei die Kettenglieder 3 abwechselnd als Horizontalglieder 3A und Vertikalglieder 3B vorgesehen sind, deren Aufspannebenen bei Gebrauch jeweils senkrecht zueinander ausgerichtet sind.

Wie die Darstellung der Fig. 1 zeigt, umfaßt die Kettenschlaufe 6 einen über die eine Umfangshälfte der Last 10 verlaufenden Kettenstrang 21, an den sich auf der gegenüberliegenden Hälfte des Umfangs der Last 10 der Kettenstrang 22 anschließt, der an seinem freien Ende das Verbindungsteil 8 trägt.

Der Kettenstrang 21 geht an der Unterseite der Last 10 in den Kettenstrang 22 über, wobei diese beiden Kettenstränge 21 und 22 Teil des das Kettengehänge 1 ausbildenden, gesamten Kettenstranges 2 sind.

Wie Fig. 3 zeigt, ist der von der (nicht dargestellten) Last 10 her kommende Kettenstrang 22 mit seinem letzten Vertikalglied in den Spalt 13 zwischen den beiden Längsschenkeln 11, 12 eingeführt, wobei der dann montierte Bolzen 16, der durch die innere Gliedöffnung dieses letzten Vertikalgliedes hindurchragt, die von dem Strang 22 kommende, durch die angehängte Last 10 bewirkte Kraft über dieses letzte Vertikalglied des Stranges 22 und über den Bolzen 16 in die Längsschenkel 11 und 12 einleitet.

Der von der anderen Seite der Last her kommende Strang 21 läuft, wie Fig. 3 zeigt, oberhalb des Bolzens 16 und des an diesem angreifenden Horizontalgliedes bis hin zu dem Querbügel 17, wobei das letzte Horizontalglied 3A' dieses Stranges 21 mit seinem abgerundeten Endabschnitt 20 seitlich in den Vertiefungen 18 und 19 auf den Längsschenkeln 11 und 12 anliegt und mit seinem abgerundeten Endbereich 20 gegen die Seitenstege des Quersteges 17 so anliegt, daß eine Bewegung dieses genannten Horizontalgliedes 3A' in Längsrichtung der Längsschenkel 11 und 12 durch die Innenöffnung des Querbügels 17 hindurch blockiert wird.

Das in dieses Horizontalglied 3A' eingehängte Vertikalglied 3B' auf der Seite des Querbügels 17 kann, wie Fig. 3 zeigt, durch die Innenöffnung des Querbügels 17 jedoch unbehindert durch diesen nach seiner Außenseite hindurchragen, wo es dann nachfolgend wieder an ein Horizontalglied 3A des Kettenstranges 2 angeschlossen ist.

Im praktischen Einsatz ergibt sich bei dem dargestellten Verbindungsteil 8 nun folgende Wirkungsweise:
Von der zu tragenden Last 10 her, die in Fig. 3 nicht dargestellt ist, wird von den beiden Strängen 21 und 22 der Kettenschlaufe 6 jeweils etwa die halbe Last aufgenommen.

Während der Strang 22 die von ihm aufgenommene Last über den Bolzen 16 auf die Längsschenkel 11 und 12 überträgt, wird über diese und den Querbügel 17 diese Last gegen den vorderen abgerundeten Bereich 20 des letzten Horizontalgliedes 3A' der Kette vor dem Querbügel 17 übertragen und von diesem Horizontalglied 3A' seinerseits auf das nachfolgende, durch den Querbügel 17 hindurchlaufende Vertikalglied 3B' weitergeleitet.

Zusätzlich zu dieser Belastung wird von dem anderen Kettenstrangabschnitt 21 der Kettenschlaufe 6 ebenfalls etwa die halbe Last 10 übertragen, die dann ebenfalls noch von dem letzten Vertikalglied 3A' vor dem Querbügel 17 auf das durch diesen hindurchragende Vertikalglied 3B' weitergeleitet wird, so daß in dem Bereich des Kettenstranges 2, der nach dem Durchlauf des Querbügels 17 bis hin zum Anschlußglied 4 vorliegt, die insgesamt aufgenommene Last 10 gehalten wird.

Dabei ist durch die spezielle Ausgestaltung des Verbindungsteiles 8 gewährleistet, daß die von den Kettenstrangabschnitten 21 und 22 übertragenen Kräfte zu keinen zusätzlichen Biegebeanspruchungen am Kettenstrang 2 führen, welche eine Reduktion der Tragfähigkeit zur Folge hätten, wobei vom Verbindungsteil 8 insbesondere auch keine Belastung direkt an das Vertikalglied 3B', welches durch den Querbügel 17 hindurchragt, übertragen wird.

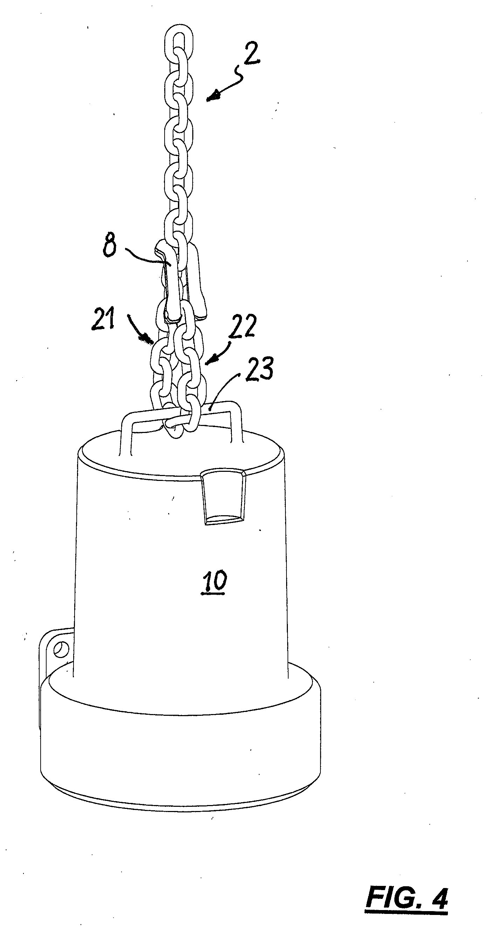

Fig. 4 zeigt, erneut in perspektivischer Ansicht, die Anwendung eines Kettengehänges mit einem Verbindungsteil 8, wie es in den Figuren 2 und 3 dargestellt ist, zum Tragen einer Last 10, wobei hier die Kettenschlaufe 6 jedoch nicht den Außenumfang der Last 10 umläuft, sondern in Verbindung mit einem an der Last oben angebrachten Tragesteg 23 eingesetzt ist, um den herum die Kettenschlaufe 6 geführt ist.

## Patentansprüche

1. Kettengehänge (1) umfassend einen aus vertikalen und horizontalen Kettengliedern (3) bestehenden Kettenstrang (2) und ein an diesem befestigbares Verbindungsteil (8), mittels dessen eine Kettenschlaufe (6) am Kettenstrang (2) ausbildbar ist, wobei das Verbindungsteil (8) zwei zueinander parallele, zwischen sich einen Spalt (13) ausbildende Längsschenkel (11, 12) aufweist, die im Bereich ihrer einen Enden in einen Querbügel (17) einlaufen, der von ihnen jeweils angenähert senkrecht nach einer Vorderseite des Verbindungsteiles (8) hin vorspringt, beide Längsschenkel (11, 12) miteinander verbindet und an seiner Innenseite eine Öffnung ausbildet, wobei der Spalt (13) zwischen beiden Längsschenkeln (11, 12) breiter ist als die Stegdicke (B) der Schweißstelle eines Kettengliedes (3) des Kettengehänges (1), jedoch kleiner als die Gliedbreite (C) eines Kettengliedes (3) des Kettenstranges (2) und auf der Oberseite jedes Längsschenkels (11, 12) im Bereich dessen Einlaufs in den Querbügel (17) und auf der dem Spalt (13) zwischen beiden Längsschenkeln (11, 12) zugewandten Seite sowie bis zu diesem hin eine Vertiefung (18, 19) angebracht ist, in der ein Endbereich (20) eines Kettengliedes (3), das angenähert parallel zur Öffnungsebene des Spaltes (13) zwischen beiden Längsschenkeln (11, 12) ist, unter gleichzeitiger Abstützung in Längsrichtung des Seitenschenkels (11, 12) in Richtung auf den Querbügel (17) hin aufnehmbar ist, **dadurch gekennzeichnet, daß** die Längsschenkel (11, 12) des Verbindungsteils (8) im Bereich ihrer dem Querbügel (17) gegenüberliegenden anderen Schenkelenden (14, 15) über einen senkrecht zu ihnen verlaufenden Bolzen (16) miteinander verbindbar sind, der im montierten Zustand durch die innere Gliedöffnung des letzten Vertikalgliedes (3B) des Kettenstranges (2) hindurchragt, und der Querbügel (17) im Bereich zwischen beiden Längsschenkeln (11, 12) einen halbkreisförmig gerundeten Verlauf aufweist sowie von den Längsschenkeln (11, 12) soweit nach der Vorderseite des Verbindungsteiles (8) hin vorspringt, daß die Öffnung an seiner Innenseite sich über eine Länge angenähert der halben Gliedbreite (C) eines Kettengliedes (3) des Kettenstranges (2) erstreckt.

2. Kettengehänge (1) nach Anspruch 1, bei dem der Querbügel (17) auf seiner Innenseite eine Öffnung umgrenzt, deren Breite quer zur Längsrichtung der Längsschenkel (11, 12) größer als die Stegbreite (B) eines Kettengliedes (3) an dessen Schweißstelle, jedoch kleiner als dessen Gliedbreite (C) ist.

3. Kettengehänge (1) nach Anspruch 1 oder Anspruch 2, bei dem die Mantelfläche des Bolzens (16) einen Krümmungsradius aufweist, der dem Krümmungsradius eines gekrümmten Endbereichs (20) der Innenöffnung eines Kettengliedes (3) des Kettenstranges (2) entspricht.

4. Kettengehänge (1) nach einem der Ansprüche 1 bis 3, **dadurch gekennzeichnet, daß** das Verbindungsteil (8) als Schmiedeteil ausgeführt ist.

5. Kettengehänge (1) nach einem der Ansprüche 1 bis 4, bei dem der Bolzen (16) im montierten Zustand durch eine Klebeverbindung an mindestens einem der Längsschenkel (11, 12) des Verbindungsteiles (8) fixiert ist.

6. Kettengehänge (1) nach einem der Ansprüche 1 bis 4, bei dem der Bolzen (16) im montierten Zustand durch einen Splint am Verbindungsteil (8) fixiert ist.

7. Kettengehänge (1) nach einem der Ansprüche 1 bis 4, bei dem der Bolzen (16) im montierten Zustand durch eine selbstsichernde Mutter am Verbindungsteil (8) fixiert ist.

8. Kettengehänge (1) nach einem der Ansprüche 1 bis 7, bei dem an beiden Enden des halbkreisförmigen Verlaufes des Querbügels (7) jeweils ein zu einem Längsschenkel (11, 12) des Verbindungsteiles (8) hin gerichteter gerade verlaufender Steg angebracht ist, der mit dem zugewandten Endbereich eines der beiden Längsschenkel (11, 12) verbunden ist.

## Claims

1. Chain sling (1) comprising a chain strand (2), which consists of vertical and horizontal chain links (3), and a connecting part (8) which can be fastened to the said chain strand (2) and by means of which a chain loop (6) can be configured on the chain strand (2), the connecting part (8) having two longitudinal limbs (11, 12) which are parallel to one another, configuring a gap (13) between them, and running, in the region of their one ends, into a transverse bracket (17) which projects from them in each case in an approximately perpendicular manner towards a front side of the connecting part (8), connects the two longitudinal limbs (11, 12) to one another, and configures an opening on its inner side, the gap (13) between the two longitudinal limbs (11, 12) being wider than the stud thickness (B) of the welded point of a chain link (3) of the chain sling (1), but being smaller than the link width (C) of a chain link (3) of the chain strand (2), and a depression (18, 19) being made on the upper side of each longitudinal limb (11, 12) in the region of its inlet into the transverse bracket (17) and on the side which faces the gap (13) between the two longitudinal limbs (11, 12), and towards the said gap (13), in which depression (18, 19) an end region (20) of a chain link (3) which is approximately parallel to the opening plane of the gap (13) between the two longitudinal limbs (11, 12) can be received with support at the same time in the longitudinal direction of the side limb (11, 12) in the direction towards the transverse bracket (17), **characterized in that** the longitudinal limbs (11, 12) of the connecting part (8) can be connected to one another, in the region of their other limb ends (14, 15) which lie opposite the transverse bracket (17), via a pin (16) which runs perpendicularly with respect to them and, in the assembled state, protrudes through the inner link opening of the last vertical link (3B) of the chain strand (2), and, in the region between the two longitudinal limbs (11, 12), the transverse bracket (17) has a semicircularly rounded course and projects from the longitudinal limbs (11, 12) towards the front side of the connecting part (8) to such an extent that, on its inner side, the opening extends over a length approximately half the link width (C) of a chain link (3) of the chain strand (2).

2. Chain sling (1) according to Claim 1, in the case of which, on its inner side, the transverse bracket (17) surrounds an opening, the width of which transversely with respect to the longitudinal direction of the longitudinal limbs (11, 12) is greater than the stud width (B) of a chain link (3) at its welded point, but is smaller than its link width (C).

3. Chain sling (1) according to Claim 1 or Claim 2, in the case of which the shell surface of the pin (16) has a curvature radius which corresponds to the curvature radius of a curved end region (20) of the inner opening of a chain link (3) of the chain strand (2).

4. Chain sling (1) according to one of Claims 1 to 3, **characterized in that** the connecting part (8) is configured as a forged part.

5. Chain sling (1) according to one of Claims 1 to 4, in the case of which, in the assembled state, the pin (16) is fixed by way of an adhesive bond on at least one of the longitudinal limbs (11, 12) of the connecting part (8).

6. Chain sling (1) according to one of Claims 1 to 4, in the case of which, in the assembled state, the pin (16) is fixed by way of a splint on the connecting part (8).

7. Chain sling (1) according to one of Claims 1 to 4, in the case of which, in the assembled state, the pin (16) is fixed by way of a self-locking nut on the connecting part (8).

8. Chain sling (1) according to one of Claims 1 to 7, in the case of which in each case one stud which runs straight, is directed towards a longitudinal limb (11, 12) of the connecting part (8), and is connected to the facing end region of one of the two longitudinal limbs (11, 12) is attached to the two ends of the semicircular course of the transverse bracket (7).

## Revendications

1. Suspension à chaîne (1) comprenant un brin de chaîne (2) constitué de maillons de chaîne verticaux et horizontaux (3) et une partie de liaison (8) pouvant être fixée à celui-ci, au moyen de laquelle une boucle de chaîne (6) peut être formée sur le brin de chaîne (2), la partie de liaison (8) présentant deux branches longitudinales (11, 12) parallèles l'une à l'autre, formant entre elles une fente (13), qui entrent dans un étrier transversal (17) dans la zone d'une de leurs extrémités, qui fait respectivement saillie à partir de celles-ci approximativement perpendiculairement vers un côté avant de la partie de liaison (8), qui relie les deux branches longitudinales (11, 12) entre elles et qui forme une ouverture sur son côté intérieur, la fente (13) entre les deux branches longitudinales (11, 12) étant plus large que l'épaisseur de traverse (B) du point de soudure d'un maillon de chaîne (3) de la suspension à chaîne (1), mais plus petite que la largeur de maillon (C) d'un maillon de chaîne (3) du brin de chaîne (2), et un creux (18, 19) étant disposé sur le côté supérieur de chaque branche longitudinale (11, 12), dans la zone de son entrée dans l'étrier transversal (17) et sur le côté tourné vers la fente (13) entre les deux branches longitudinales (11, 12) ainsi que jusqu'à celle-ci, dans lequel une zone d'extrémité (20) d'un maillon de chaîne (3), qui est approximativement parallèle au plan d'ouverture de la fente (13) entre les deux branches longitudinales (11, 12), peut être reçue avec un soutien simultané dans la direction longitudinale de la branche latérale (11, 12) en direction de l'étrier transversal (17), **caractérisée en ce que** les branches longitudinales (11, 12) de la partie de liaison (8) peuvent être reliées entre elles dans la zone de leurs autres extrémités de branche (14, 15) opposées à l'étrier transversal (17) par l'intermédiaire d'un boulon (16) s'étendant perpendiculairement à elles, qui, à l'état monté, traverse l'ouverture de maillon intérieure du dernier maillon vertical (3B) du brin de chaîne (2), et l'étrier transversal (17) présente, dans la zone entre les deux branches longitudinales (11, 12), une étendue arrondie en forme de demi-cercle, et fait saillie à partir des branches longitudinales (11, 12) vers le côté avant de la partie de liaison (8) jusqu'à ce que l'ouverture sur son côté intérieur s'étende sur une longueur d'approximativement la moitié de la largeur de maillon (C) d'un maillon de chaîne (3) du brin de chaîne (2).

2. Suspension à chaîne (1) selon la revendication 1, dans laquelle l'étrier transversal (17) délimite sur son côté intérieur une ouverture dont la largeur, transversalement à la direction longitudinale des branches longitudinales (11, 12), est supérieure à la largeur de traverse (B) d'un maillon de chaîne (3) à son point de soudure, mais inférieure à sa largeur de maillon (C).

3. Suspension à chaîne (1) selon la revendication 1 ou la revendication 2, dans laquelle la surface d'enveloppe du boulon (16) présente un rayon de courbure qui correspond au rayon de courbure d'une zone d'extrémité (20) incurvée de l'ouverture intérieure d'un maillon de chaîne (3) du brin de chaîne (2).

4. Suspension à chaîne (1) selon l'une quelconque des revendications 1 à 3, **caractérisée en ce que** la partie de liaison (8) est réalisée sous forme de partie forgée.

5. Suspension à chaîne (1) selon l'une quelconque des revendications 1 à 4, dans laquelle le boulon (16) est fixé à l'état monté par une liaison adhésive sur au moins une des branches longitudinales (11, 12) de la partie de liaison (8).

6. Suspension à chaîne (1) selon l'une quelconque des revendications 1 à 4, dans laquelle le boulon (16) est fixé à l'état monté sur la partie de liaison (8) par une goupille fendue.

7. Suspension à chaîne (1) selon l'une quelconque des revendications 1 à 4, dans laquelle le boulon (16) est fixé à l'état monté sur la partie de liaison (8) par un écrou autobloquant.

8. Suspension à chaîne (1) selon l'une quelconque des revendications 1 à 7, dans laquelle une traverse rectiligne orientée vers une branche longitudinale (11, 12) de la partie de liaison (8) est disposée respectivement aux deux extrémités de l'étendue en forme de demi-cercle de l'étrier transversal (7), qui est reliée à la zone d'extrémité tournée vers celle-ci d'une des deux branches longitudinales (11, 12).
